# EUROPEAN PATENT APPLICATION

(11) **EP 4 481 861 A1**
(43) Date of publication of application: **25.12.2024**
(21) Application number: 23875916.1
(22) Date of filing: 28.06.2023
(51) Int. Cl.: H01M 4/64, H01M 10/0525

(54) **CURRENT COLLECTOR, ELECTRODE SHEET, ELECTRODE ASSEMBLY, BATTERY CELL, BATTERY AND ELECTRIC APPARATUS**

(30) Priority: 08.05.2023 CN 202310507707
(71) Applicant: Contemporary Amperex Technology (Hong Kong) Limited, Central, Central And Western District (HK)
(72) Inventor: WU, Kai, Ningde, Fujian 352100 (CN); ZHANG, Yu, Ningde, Fujian 352100 (CN); XUE, Qingrui, Ningde, Fujian 352100 (CN); ZHANG, Zige, Ningde, Fujian 352100 (CN); ZHAO, Zhengyuan, Ningde, Fujian 352100 (CN); ZHANG, Jinsong, Ningde, Fujian 352100 (CN)
(74) Representative: Gong, Jinping
(86) International application number: PCT/CN2023/103364
(87) International publication number: WO 2024/229948

(57) **Abstract**

This application provides a battery cell, a battery, and an electric device. The battery cell is of a cylindrical structure, the battery cell includes a wound electrode assembly, an electrode plate of the electrode assembly includes a current collector, and the current collector includes a support layer and a conductive layer. In a thickness direction of the current collector, the conductive layer is disposed on at least one side of the support layer, and elongation of the support layer is greater than elongation of the conductive layer. In the thickness direction of the current collector, the support layer has a thickness greater than a total thickness of the conductive layer of the current collector. As the elongation of the support layer is greater than that of the conductive layer and the thickness of the support layer of the current collector is greater than the total thickness of the conductive layer of the current collector, under the condition that a thickness of the current collector is given, the thickness proportion of the support layer is greater than the thickness proportion of the conductive layer, allowing for good extensibility of the insulating layer, such that the current collector can withstand a large swelling force without breaking. This allows the current collector to meet the requirement on swelling alleviation of a battery cell with high-energy density, improving the reliability of the battery cell with high-energy density.

## Description

### CROSS-REFERENCE TO RELATED APPLICATIONS

This application claims priority to Chinese Patent Application No. 202310507707.0, filed on May 08, 2023 and entitled "CURRENT COLLECTOR, ELECTRODE PLATE, ELECTRODE ASSEMBLY, BATTERY CELL, BATTERY, AND ELECTRIC DEVICE", which is incorporated herein by reference in its entirety.

### TECHNICAL FIELD

This application relates to the field of battery technologies, and specifically to a battery cell, a battery, and an electric device.

### BACKGROUND

Batteries are widely used in various fields such as portable electronic devices, electric vehicles, electric tools, drones, and energy storage devices. As the application fields expand, the reliability of batteries has become one of the key concerns for users.

### SUMMARY

Embodiments of this application provide a battery cell, a battery, an electric device, to improve reliability of battery cells.

According to a first aspect, an embodiment of this application provides a battery cell, where the battery cell is of a cylindrical structure, the battery cell includes an electrode assembly, the electrode assembly is of a wound structure, the electrode assembly includes an electrode plate, and the electrode plate includes a support layer and a conductive layer. In a thickness direction of a current collector, the conductive layer is disposed on at least one side of the support layer. Elongation of the support layer is greater than elongation of the conductive layer, and in the thickness direction of the current collector, the support layer has a thickness greater than a total thickness of the conductive layer of the current collector.

In the foregoing technical solution, as the elongation of the support layer is greater than that of the conductive layer and the thickness of the support layer of the current collector is greater than the total thickness of the conductive layer of the current collector, under the condition that a thickness of the current collector is given, the thickness proportion of the support layer is greater than the thickness proportion of the conductive layer, allowing for good extensibility of the insulating layer, such that the current collector can withstand a large swelling force without breaking. This allows the current collector to meet the requirement on swelling alleviation of a battery cell with high-energy density, improving the reliability of the battery cell with high-energy density.

In some embodiments of the first aspect of this application, in the thickness direction of the current collector, the thickness of the support layer is H₁, and the total thickness of the conductive layer of the current collector is H₂, H₁ and H₂ satisfying H₁/H₂≤50.

In the foregoing technical solution, a larger thickness H₁ of the support layer indicates better strength and elongation of the current collector. A larger total thickness H₂ of the conductive layer indicates a better current flow capability. Under the condition that a thickness of the current collector is given, if H₁/H₂>50, a proportion of the thickness of the support layer in the thickness of the current collector is high, and a proportion of the total thickness of the conductive layer in the thickness of the current collector is low, which may result in a small current flow capability of the conductive layer. Therefore, H₁/H₂≤50 can not only allow for good strength and elongation of the current collector, to meet the requirement on swelling alleviation of a battery cell with high-energy density, but also allow for a good current flow capability of the conductive layer, to meet the charge and discharge requirement of the battery cell with high rate.

In some embodiments of the first aspect of this application, 2≤H₁/H₂≤20.

In the foregoing technical solution, if 1<H₁/H₂<2, the thickness of the support layer is a slightly larger than the total thickness of the conductive layer, and a battery cell manufactured using such current collector is difficult to meet the requirements of both a high energy density and a high rate. If 20<H₁/H₂<50, the thickness of the support layer is greatly larger than the total thickness of the conductive layer. This may result in, under the condition that the thickness of the current collector is given, a small total thickness of the conductive layer, thereby causing a low current flow capability of the conductive layer. Therefore, 2≤H₁/H₂≤20 allows the current collector to have good strength and elongation of and the conductive layer of the current collector to have a good current flow capability. The battery cell manufactured using such current collector can meet the requirements of both a high energy density and a high rate.

In some embodiments of the first aspect of this application, in the thickness direction of the current collector, the thickness of the support layer is H₁, satisfying 1µm≤H₁≤20µm.

In the foregoing technical solution, if 1µm>H₁, the strength and elongation of the support layer are both low, causing the current collector to have low strength and elongation. If H₁>20µm, the support layer has a large thickness, causing the current collector to have a large thickness and occupy a large space, and decreasing the energy density of the battery cell manufactured using the current collector. Therefore, 1µm≤H₁<20µm allows the current collector to have good strength and elongation to meet the requirement on swelling alleviation of a battery cell with high energy density.

In some embodiments of the first aspect of this application, 3µm≤H₁≤14µm.

In the foregoing technical solution, in the case of 3µm≤H₁≤14µm, the strength and elongation of the support layer are both good, such that the current collector has good strength and elongation to meet the requirement on swelling alleviation of a battery cell with high energy density.

In some embodiments of the first aspect of this application, the total thickness of the conductive layer of the current collector is H₂, satisfying 0.1µm ≤H₂≤10µm.

In the foregoing technical solution, if 0.1µm>H₂, the current flow capability of the conductive layer is weak. If H₁>10µm, the conductive layer has a large thickness and occupies a large space, which may decrease the energy density of the battery cell manufactured using the current collector. Therefore, 0.1µm≤H₁≤10µm allows the conductive layer of the current collector to have good electrical conductivity to meet the high rate requirement of the battery cell.

In some embodiments of the first aspect of this application, 0.5µm≤H₂≤5µm.

In the foregoing technical solution, 0.5µm≤H₁≤5µm allows the conductive layer of the current collector to have better electrical conductivity to meet the high rate requirement of the battery cell.

In some embodiments of the first aspect of this application, a surface of the conductive layer facing the support layer is provided with a protrusion, the protrusion being inserted in the support layer.

In the foregoing technical solution, the protrusion disposed on the surface of the conductive layer facing the support layer is inserted in the support layer, which can increase the connection area between the conductive layer and the support layer and helps improve the connection stability between the conductive layer and the support layer. The protrusion disposed on the surface of the conductive layer facing the support layer is inserted in the support layer, which can enhance the connection force between the conductive layer and the support layer. During swelling of the current collector, the connection force can restrain swelling of the conductive layer and support layer, which helps alleviate swelling of the current collector and increase elongation of the current collector. In this way, the current collector can meet the requirement on swelling alleviation of a battery cell with high energy density, thereby improving the reliability of the battery cell with high energy density.

In some embodiments of the first aspect of this application, the support layer is an insulating layer.

In the foregoing technical solution, the support layer being an insulating layer can reduce the weight of the current collector, thereby reducing the weight of the battery cell manufactured using the current collector.

In some embodiments of the first aspect of this application, a material of the insulating layer includes at least one of polypropylene, polyethylene, and polyethylene terephthalate.

In the foregoing technical solution, polypropylene, polyethylene, and polyethylene terephthalate have good insulation properties and heat resistance, and thus it is reliable to use a battery cell manufactured using such current collector. Polypropylene, polyethylene, and polyethylene terephthalate are relatively light, which helps reduce the weight of the current collector, thereby reducing the weight of the battery cell manufactured using such current collector.

In some embodiments of the first aspect of this application, the conductive layer is made of copper or aluminum.

In the foregoing technical solution, copper or aluminum has good electrical conductivity, which helps improve the reliability of a battery cell manufactured using the current collector.

In some embodiments of the first aspect of this application, in the thickness direction of the current collector, the conductive layer is disposed on each of two sides of the support layer.

In the foregoing technical solution, as the conductive layer is disposed on each of two sides of the support layer, in the thickness direction of the current collector, an active substance layer can be disposed on each of two sides of the current collector, which helps increase the energy density of a battery cell including the current collector.

In some embodiments of the first aspect of this application, the electrode plate includes an active substance layer, and in the thickness direction of the current collector, the active substance layer is disposed on a side of the conductive layer back away from the support layer.

In the foregoing technical solution, the insulating layer of the current collector has good extensibility, allowing the current collector to withstand a large swelling force, such that an electrode plate including the current collector can withstand a large swelling force and the electrode plate can meet the requirement on swelling alleviation of a battery cell with high energy density, which can improve the reliability of the battery cell having high energy density and manufactured using the electrode plate.

In some embodiments of the first aspect of this application, the electrode assembly includes such two electrode plates with opposite polarities.

According to a second aspect, an embodiment of this application further provides a battery including the battery cell provided in any one of the embodiments of the first aspect.

In the foregoing technical solution, the battery cell provided in any one of the embodiments of the second aspect has good reliability, and a battery including the battery cell also has good reliability.

According to a third aspect, an embodiment of this application further provides an electric device including the battery provided in the embodiments of the first aspect.

In the foregoing technical solution, the battery provided in the embodiments of a fifth aspect has good reliability, and an electric device to which the battery provides electrical energy has good reliability of electricity supply.

### BRIEF DESCRIPTION OF DRAWINGS

In order to describe the technical solutions in the embodiments of this application more clearly, the following briefly describes the accompanying drawings required for describing the embodiments. It should be appreciated that, the accompanying drawings below only show some embodiments of this application, and thus should not be considered as a limitation to the scope. A person of ordinary skill in the art may still derive other related drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic structural diagram of an electrode plate according to some embodiments of this application;
FIG. 5 is a schematic structural diagram of a current collector according to some embodiments of this application;
FIG. 6 is a comparison diagram of a support layer before and after tension fracture;
FIG. 7 is a comparison diagram of a conductive layer before and after tension fracture;
FIG. 8 is a schematic structural diagram of a current collector according to some other embodiments of this application;
FIG. 9 is a schematic structural diagram of a current collector according to still some other embodiments of this application;
FIG. 10 is a schematic structural diagram of an electrode plate according to some other embodiments of this application;
FIG. 11 is a schematic structural diagram of a current collector according to yet some other embodiments of this application; and
FIG. 12 is a schematic structural diagram of a current collector according to still yet some other embodiments of this application.

Reference numerals in the accompanying drawings are described as follows: 1000. vehicle; 100. battery; 10. box; 11. first portion; 12. second portion; 20. battery cell; 21. housing; 211. end cover; 212. housing body; 213. electrode terminal; 22. electrode assembly; 221. electrode plate; 2211. active substance layer; 2212. current collector; 22121. support layer; 221211. first sub-portion; 221212. second sub-portion; 22122. conductive layer; 221221. third sub-portion; 221222. fourth sub-portion; 22123. protrusion; 22124. recess; 200. controller; 300. motor; X. thickness direction of current collector; Y length direction of current collector; and Z. width direction of current collector.

### DETAILED DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all of the embodiments of this application. Generally, the components of the embodiments of this application as described and illustrated in the accompanying drawings herein can be arranged and designed in a variety of configurations.

Therefore, the following detailed description of the embodiments of this application as provided in the accompanying drawings is not intended to limit the scope of this application but merely to represent selected embodiments of this application. All other embodiments obtained by persons of ordinary skill in the art based on the embodiments of this application without creative efforts shall fall within the protection scope of this application.

It should be noted that, without conflict, the embodiments and features in the embodiments in this application may be combined with each other.

It should be noted that similar reference signs and letters indicate similar items in the following drawings, and therefore once an item is defined in one drawing, it does not need to be further defined and explained in the subsequent drawings.

In the description of the embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. The battery cell is typically divided into three types by packaging method: cylindrical battery cell, prismatic battery cell, and pouch battery cell. This is not limited in the embodiments of this application either.

The battery cell includes a housing and an electrode assembly, where the electrode assembly is accommodated in the housing. The electrode assembly includes a separator and two electrode plates with opposite polarities. The two electrode plates with opposite polarities are positive electrode plate and negative electrode plate. The battery cell mainly relies on movement of metal ions between a positive electrode plate and a negative electrode plate to work. The electrode plate includes a current collector and an active substance layer, where the active substance layer is applied to a surface of the current collector.

For a cylindrical battery cell, as the energy density of the battery cell increases, during cycling of the cylindrical battery cell, the volume swelling rate of the battery cell continuously increases, but the housing of the battery cell has a limited internal space, that is, a large group margin, resulting in a small gap between the positive electrode plate and negative electrode plate and a limited swelling space of the electrode plate during charging of the battery cell. In this case, one electrode plate withstands a large swelling force after the battery cell of high energy density is charged, and is likely to be damaged and broken, and the broken electrode plate pierces the separator to abut against the adjacent electrode plate, which is prone to short circuit and leads to thermal runaway of the battery cell. In other words, the electrode plate cannot withstand a large swelling force and breaks, which results in low reliability of the battery cell.

Based on the foregoing consideration, to alleviate the problem of low reliability of the cylindrical battery cell due to the breakage of the electrode plate under a large swelling force that cannot be withstood by the electrode plate, an embodiment of this application provides a battery cell. The battery cell is of a cylindrical structure, and the battery cell includes an electrode assembly. The electrode assembly includes an electrode plate, the electrode plate includes a current collector, and the current collector includes a support layer and a conductive layer. In a thickness direction of the current collector, the conductive layer is disposed on at least one side of the support layer, elongation of the support layer is greater than elongation of the conductive layer, and the support layer has a thickness greater than a total thickness of the conductive layer of the current collector.

As the elongation of the support layer is greater than that of the conductive layer and the thickness of the support layer of the current collector is greater than the total thickness of the conductive layer of the current collector, under the condition that a thickness of the current collector is given, the thickness proportion of the support layer is greater than the total thickness proportion of the conductive layer, allowing for good extensibility of the insulating layer, such that the current collector can withstand a large swelling force without breaking. This allows the current collector to meet the requirement on swelling alleviation of the battery cell with high-energy density, improving the reliability of the battery cell with high-energy density.

The current collector disclosed by the embodiments of this application can be used for manufacturing an electrode plate and a battery cell. The battery cell including the electrode plate provided in the embodiments of this application may be used without limitation in electric devices such as vehicles, ships, or aircrafts. A battery cell, battery, or the like manufactured using the electrode plate disclosed in this application may be used to form a power system of the electric device. This is conducive to alleviating the problem that the electrode plate cannot withstand a large swelling force without breaking, or will be broken, thereby improving the reliability of the battery.

The embodiments of this application provide an electric device that uses a battery as the power supply. The electric device may be, but is not limited to, a mobile phone, a tablet, a laptop computer, an electric toy, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

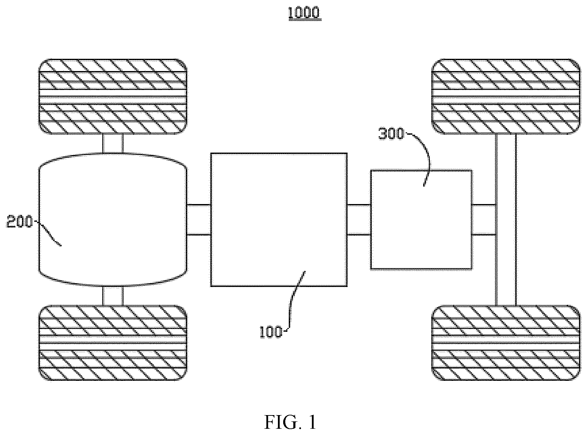

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

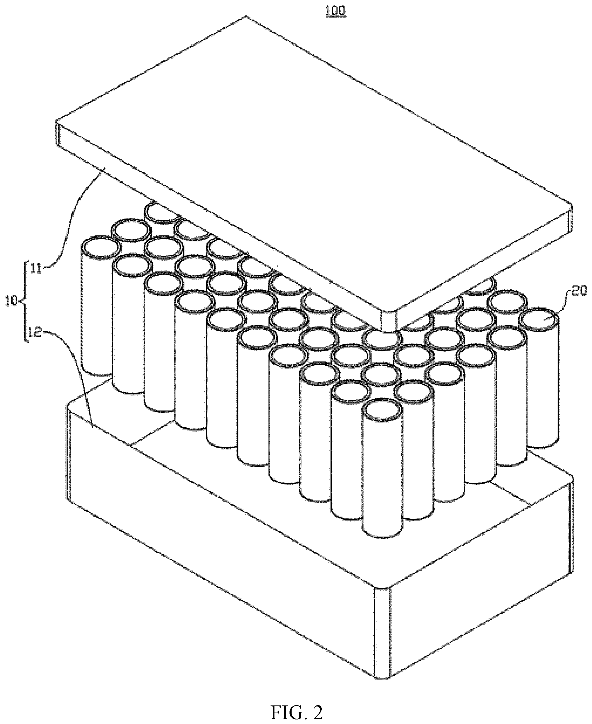

Referring to FIG. 2, FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 for the first portion 11 and the second portion 12 to jointly define an accommodating space; alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may have a variety of shapes, for example, cylinder or cuboid.

In the battery 100, the battery cells 20 may be present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel or series-parallel, and then an entirety of the plurality of battery cells 20 is accommodated in the box 10; or certainly, the battery 100 may be formed by a plurality of battery cells 20 being connected in series, parallel or series-parallel first to form a battery module and then a plurality of battery modules being connected in series, parallel or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

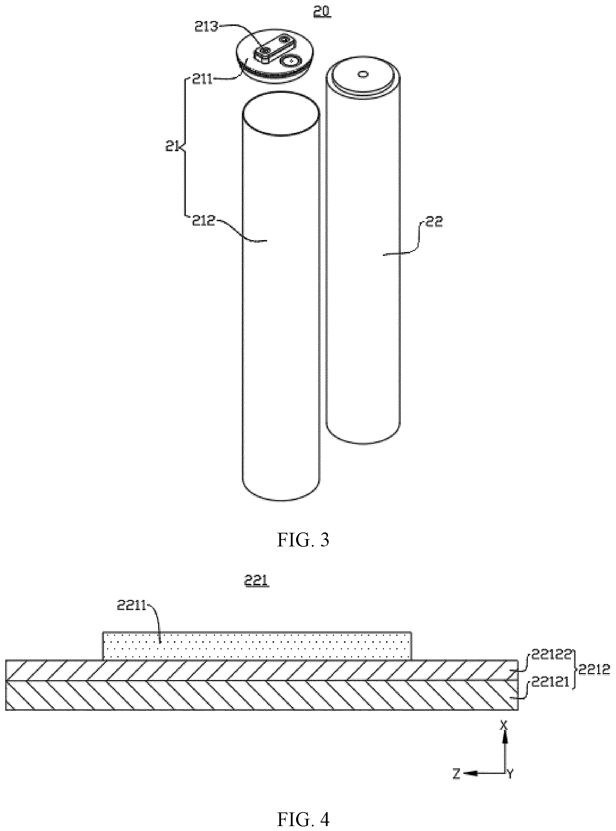

Referring to FIG. 3, FIG. 3 is a schematic structural exploded view of a battery cell 20 according to some embodiments of this application. The battery cell 20 refers to a smallest element constituting the battery 100. As shown in FIG. 3, the battery cell 20 includes a housing 21, an electrode assembly 22, and other functional components. The electrode assembly 22 is accommodated in the housing 21.

The housing 21 includes an end cover 211 and a housing body 212. The end cover 211 refers to a component that covers an opening of the housing body 212 to isolate an internal environment of the battery cell 20 from an external environment. A shape of the end cover 211 is not limited and may be adapted to a shape of the housing body 212 to fit the housing body 212. Optionally, the end cover 211 may be made of a material (for example, aluminum alloy) with specified hardness and strength, so that the end cover 211 is less likely to deform when subjected to extrusion and collision, allowing the battery cell 20 to have higher structural strength and enhanced reliability. The end cover 211 may be provided with functional components such as an electrode terminal 213. The electrode terminal 213 may be configured to be electrically connected to the electrode assembly 22 for outputting or inputting electrical energy of the battery cell 20. In some embodiments, the end cover 211 may further be provided with a pressure relief mechanism for releasing internal pressure when the internal pressure or a temperature of the battery cell 20 reaches a threshold. The end cover 211 may also be made of various materials, such as copper, iron, aluminum, stainless steel, aluminum alloy, and plastic, which are not particularly limited in the embodiments of this application. In some embodiments, an insulator may also be provided on an inner side of the end cover 211. The insulator may be configured to isolate an electrically connected component in the housing body 212 from the end cover 211 to reduce a risk of short circuit. For example, the insulator may be made of plastic, rubber, or the like.

The housing body 212 is an assembly configured to form an internal environment of the battery cell 20 together with the end cover 211, where the formed internal environment may be configured to accommodate the electrode assembly 22, an electrolyte, and other components. The housing body 212 and the end cover 211 may be separate components, an opening may be provided on the housing body 212, and the end cover 211 covers the opening to form the internal environment of the battery cell 20. The end cover 211 and the housing body 212 are not limited and may also be integrated. Specifically, the end cover 211 and the housing body 212 may form a shared connection surface before other components are disposed inside the housing, and then the housing body 212 is covered with the end cover 211 when inside of the housing body 212 needs to be enclosed. The housing body 212 may be of various shapes and sizes, such as a cuboid shape, a cylindrical shape, and a hexagonal prism shape. Specifically, a shape of the housing body 212 may be determined according to a specific shape and size of the electrode assembly 22. The housing body 212 may be made of various materials, such as copper, iron, aluminum, stainless steel, aluminum alloy, and plastic, which are not particularly limited in the embodiments of this application.

The electrode assembly 22 is a component in which electrochemical reactions occur in the battery cell 20. The housing body 212 may include one or more electrode assemblies 22. The electrode assembly 22 is mainly formed by winding or stacking two electrode plates 221 with opposite polarities, and a separator is generally provided between the two electrode plates 221 with opposite polarities. The separator may be made of PP (polypropylene, polypropylene), PE (polyethylene, polyethylene), or the like.

Portions, of the two electrode plates 221 with opposite polarities, having an active substance form the body portion of the electrode assembly 22, and portions, of the two electrode plates 221 with opposite polarities, without the active substance respectively form tabs, namely, a positive electrode tab and a negative electrode tab. The positive electrode tab and the negative electrode tab may both be located at one end of the body portion or be located at two ends of the body portion respectively. During charging and discharging of the battery 100, a positive electrode active substance and a negative electrode active substance react with an electrolyte, and the tabs are connected to the electrode terminals 213 to form a current loop.

As shown in FIG. 4, in some embodiments, the electrode plate 221 includes an active substance layer 2211 and a current collector 2212. In the thickness direction X of the current collector, the active substance layer 2211 is disposed at least one side of the current collector 2212.

In the thickness direction X of the current collector, the active substance layer 2211 may be disposed on only one side or on both sides of the current collector 2212.

The material of the active substance layer 2211 varies with the polarity of the electrode plate 221. For example, when the electrode plate 221 is a positive electrode plate, the active substance layer 2211 may be made of lithium cobalt oxide, lithium iron phosphate, lithium ternary, lithium manganese oxide, or the like. If the electrode plate 221 is a negative electrode plate, the active substance layer 2211 may be made of carbon, silicon, or the like.

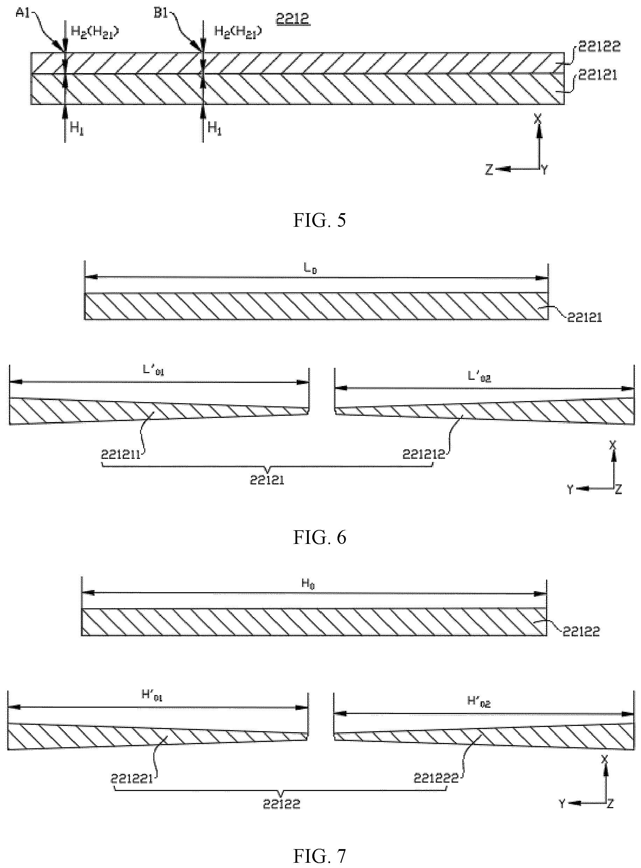

As shown in FIGs. 4 and 5, in some embodiments, the current collector 2212 includes a support layer 22121 and a conductive layer 22122. In the thickness direction X of the current collector, the conductive layer 22122 is disposed on at least one side of the support layer 22121. The elongation of the support layer 22121 is greater than the elongation of conductive layer 22122. In the thickness direction X of the current collector, the thickness of the support layer 22121 is greater than the total thickness of the conductive layer 22122 of the current collector 2212.

In the thickness direction X of the current collector, the conductive layer 22122 may be disposed on only one side or on both sides of the support layer 22121.

The conductive layer 22122 may be adhered to the surface of the support layer 22121 in the thickness direction X of the current collector or may be disposed on a side of the support layer 22121 in the thickness direction X of the current collector in another manner of, for example, melting connection. The material of the conductive layer 22122 may vary with the polarity of the electrode plate 221. If the electrode plate 221 is a positive electrode plate, the conductive layer 22122 may be made of aluminium, and if the electrode plate 221 is a negative electrode plate, the conductive layer 22122 may be made of copper.

As shown in FIG. 6, in the length direction Y of the current collector, the support layer 22121 has an original length of L₀ before tension applied, and has a total length of L'₀ after breakage under tension applied, where the length difference before and after tension applied expressed as: ΔL=L'₀-L₀, and elongation at break δ₁ of the support layer 22121 is expressed as: δ₁=(L'₀-L₀)/L*100%. It should be noted that after elongated, the support layer 22121 is broken into a first sub-portion 221211 and a second sub-portion 221212 in the length direction Y of the current collector. In the length direction Y of the current collector, the first sub-portion 221211 has a length of L'₀₁, and the second sub-portion 221212 has a length of L'₀₂, where L'₀=L'₀₁+L'₀₂.

As shown in FIG. 7, in the length direction Y of the current collector, the conductive layer 22122 has the original length of H₀ before tension applied, and has a total length of H'₀ after breakage under tension applied, where the length difference before and after tension applied is expressed as: ΔH=H'₀-H₀, and elongation at break δ₂ of the conductive layer 22122 is expressed as: δ₂=(H'₀-H₀)/H₀*100%. The following relation is satisfied: δ₁>δ₂. It should be noted that after tension applied, the conductive layer 22122 is broken into a third sub-portion 221221 and a fourth sub-portion 221222 in the length direction Y of the current collector. In the length direction Y of the current collector, the third sub-portion 221221 has a length of H'₀₁, and the fourth sub-portion 221222 has a length of H'₀₂, where H'₀=H'₀₁+H'₀₂.

Certainly, if in the width direction Z of the current collector, the sizes of the support layer 22121 and the conductive layer 22122 suffice, the support layer 22121 and the conductive layer 22122 may further be subjected to the elongating test separately in the width direction Z of the current collector. The thickness direction X of the current collector, the length direction Y of the current collector, and the width direction Z of the current collector are perpendicular to each other.

The thickness of the support layer 22121 refers to the size of the support layer 22121 in the thickness direction X of the current collector. The support layer 22121 may be a uniformly thick structure or a non-uniformly thick structure.

The thickness of the conductive layer 22122 refers to the size of the conductive layer 22122 in the thickness direction X of the current collector. The conductive layer 22122 may be a uniformly thick structure or a non-uniformly thick structure.

In the thickness direction X of the current collector, in the embodiment in which the conductive layer 22122 is disposed on only one side of the support layer 22121, the total thickness of the conductive layer 22122 of the current collector 2212 is the thickness of the conductive layer 22122. As shown in FIG. 5, in the thickness direction X of the current collector, a uniformly thick conductive layer 22122 is disposed on one side of the support layer 22121, the conductive layer 22122 has a thickness of H₂₁, and the total thickness H₂ of the conductive layer 22122 of the current collector 2212 is equal to H₂₁.

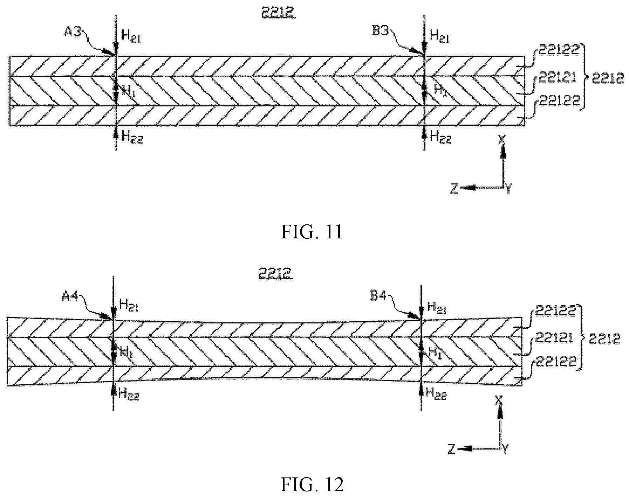

In the thickness direction X of the current collector, in the embodiment in which the conductive layer 22122 is disposed on each of two sides of the support layer 22121, the total thickness of the conductive layers 22122 of the current collector 2212 is a sum of the thicknesses of the conductive layers 22122 on two sides of the support layer 22121. As shown in FIGs. 11 and 12, in the thickness direction X of the current collector, a uniformly thick conductive layer 22122 is disposed on each of two sides of the support layer 22121. One conductive layer 22122 has a thickness of H₂₁, the other conductive layer has a thickness of H₂₂, and a total thickness of the conductive layers 22122 of the current collector 2212 is expressed with the following formula: H₂=H₂₁+H₂₂, where H₂₁ may equal H₂₂ or not.

It should be noted that the thickness of the support layer 22121 should be compared with the total thickness of the conductive layers 22122 of the current collector 2212 in the same position in the width direction Z of the current collector. In the same position in the width direction Z of the current collector, the thickness of the support layer 22121 is greater than the total thickness of the conductive layers 22122 of the current collector 2212. As shown in FIG. 5, A1 and B1 are two different positions in the width direction Z of the current collector. For example, when the thickness of the support layer 22121 is compared with the total thickness of the conductive layers 22122 of the current collector 2212, the thickness of the support layer 22121 at position A1 and the total thickness of the conductive layers of the current collector 2212 at position A1 should be compared, or the thickness of the support layer 22121 at position B1 and the total thickness of the conductive layers of the current collector 2212 at position B1 should be compared.

In an embodiment in which the support layer 22121 is of a uniformly thick structure and each conductive layer 22122 is of a uniformly thick structure, in different positions in the width direction Z of the current collector, the thickness of the support layer 22121 is greater than the total thickness of the conductive layers 22122 of the current collector 2212, and the differences between the thicknesses of the support layer 22121 and the total thicknesses of the conductive layers 22122 of the current collector 2212 are equal. For example, as shown in FIG. 5, the difference of H₂-H₁ at position A1 equals the difference of H₂-H₁ at position B1.

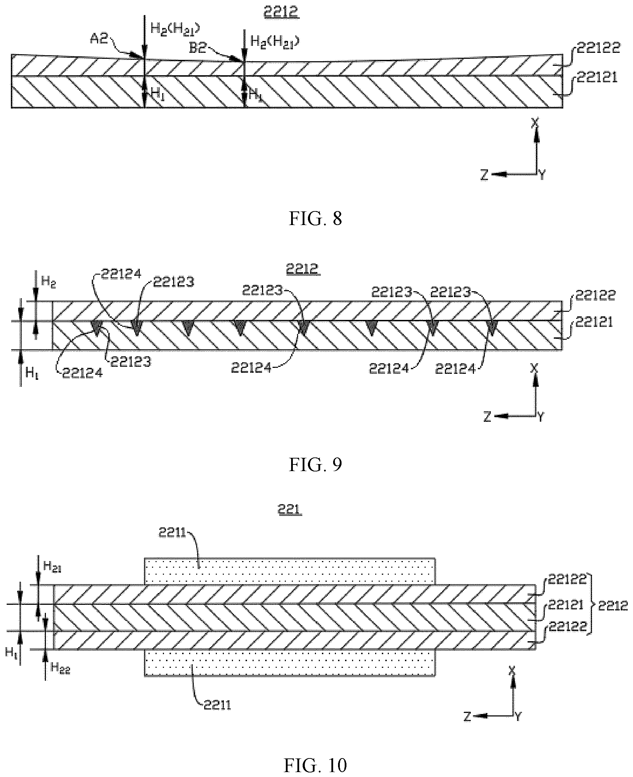

In an embodiment in which the support layer 22121 is of a non-uniformly thick structure, and each conductive layer 22122 is of a non-uniformly thick structure, at different positions in the width direction Z of the current collector, the differences between the thicknesses of the support layer 22121 and the total thicknesses of the conductive layers 22122 of the current collector 2212 may be equal or different. As shown in FIG. 8, in the thickness direction X of the current collector, a non-uniformly thick conductive layer 22122 is disposed on a side of the support layer 22121. In the width direction Z of the current collector, the difference of H₂-H₁ at position A2 is different from the difference of H₂-H₁ at position B2. As shown in FIG. 8, A2 and B2 are two different positions in the width direction Z of the current collector. For example, when the thickness of the support layer 22121 is compared with the total thickness of the conductive layer of the current collector 2212, the thickness of the support layer 22121 at position A2 and the total thickness of the conductive layer 22122 of the current collector 2212 at position A2 should be compared, or the thickness of the support layer 22121 at position B2 and the total thickness of the conductive layer 22122 of the current collector 2212 at position B2 should be compared instead of comparing the thickness of the support layer 22121 at position A1 with the total thickness of the conductive layer 22122 at position B2.

As the elongation of the support layer 22121 is greater than that of the conductive layer 22122 and the thickness of the support layer 22121 of the current collector 2212 is greater than the total thickness of the conductive layer 22122 of the current collector 2212, under the condition that a thickness of the current collector 2212 is given, the thickness proportion of the support layer 22121 is greater than the thickness proportion of the conductive layer 22122, allowing for good extensibility of the insulating layer, such that the current collector 2212 can withstand a large swelling force without breaking. This allows the current collector 2212 to meet the requirement on swelling alleviation on the battery cell 20 with high-energy density, improving the reliability of the battery cell 20 with high-energy density.

As shown in FIGs. 4 and 5, in some embodiments, in the thickness direction X of the current collector, the support layer 22121 has a thickness of H₁, and the conductive layer 22122 of the current collector 2212 has a total thickness of H₂, H₁ and H₂ satisfying H₁/H₂≤50.

Because the thickness of the support layer 22121 is greater than the total thickness of the conductive layer 22122, that is, H₁>H₂, H₁/H₂>1.

For example, H₁/H₂ may be 5, 10, 15, 20, 25, 30, 35, 40, 45, 50, or the like.

Taking an example in which the support layer 22121 is made of PET, the conductive layer 22122 is made of aluminium, the conductive layer 22122 is disposed on each of two sides of the support layer 22121, the conductive layers 22122 on two sides of the support layer 22121 have the same thickness, the current collector 2212 has a thickness of H₁+H₂ being 8µm, different current collectors 2212 of H₁/H₂ are subjected to an elongating test, to obtain data in Table 1 as follows:

**Table 1**

| H₁/H₂ | 0.5 | 1 | 2 | 3 | 4 | 5 | 6 | 8 | 10 | 20 | 30 | 50 | 70 |
|---|---|---|---|---|---|---|---|---|---|---|---|---|---|
| Elongation at break of current collector | 2.3% | 9.5% | 30.5% | 33.4% | 36.7% | 43.1% | 42.8% | 46.3% | 44.8% | 50.2% | 45.2% | 45.3% | 50.3% |

As shown in Table 1, when H₁/H₂ is 0.5, each current collector 2212 has elongation of 2.3%, which is low and difficult to satisfy the requirement on swelling alleviation of the battery cell 20 with high energy density. When H₁/H₂ is 2, 3, 4, 5, 6, 8, 10, 20, 30, 50, or 70, the current collector 2212 has high elongation. However, when H₁/H₂ is 70, the conductive layer 22122 has a thickness of only about 0.055µm and a quite small current flow capability.

Therefore, a larger thickness H₁ of the support layer 22121 indicates better strength and elongation of the current collector 2212. A larger total thickness H₂ of the conductive layer 22122 indicates a better current flow capability. In the case of a certain thickness of the current collector 2212, if H₁/H₂>50, a percentage of the thickness of the support layer 22121 in the thickness of the current collector 2212 is high, and a percentage of the total thickness of the conductive layer 22122 in the thickness of the current collector 2212 is low, which may result in a small current flow capability of the conductive layer 22122. Therefore, H₁/H₂≤50 can not only allow for better strength and elongation of the current collector 2212, to meet the requirement on swelling alleviation of the battery cell 20 with high-energy density, but also allow for a good current flow capability of the conductive layer 22122, to meet the charge and discharge requirements of the battery cell 20 with high rate.

In some embodiments, 2≤H₁/H₂≤20.

For example, H₁/H₂ may be 2, 4, 6, 8, 12, 14, 16, 18, 19, 20, or the like.

Still referring to Table 1, when 1<H₁/H₂<2, the current collector 2212 has elongation between 9.5% and 30.5%, which is higher than that when H₁/H₂≤1, but difficult to meet the requirement for a higher energy density of the battery cell on the market. Compared with H₁/H₂ of 30, 50, or 70, H₁/H₂ of 5, 6, 8, 10, or 20 does not show a significant increase in elongation and also results in an excessively large thickness of the support layer 22121 and a small thickness of the conductive layer 22122, impacting the current flow capability.

Therefore, if 1<H₁/H₂<2, the thickness of the support layer 22121 is a slightly larger than the total thickness of the conductive layer 22122, and a battery cell 20 manufactured using such current collector 2212 is difficult to meet the requirements of both a high energy density and a high rate. If 20<H₁/H₂<50, the thickness of the support layer 22121 is greatly larger than the total thickness of the conductive layer 22122. This, in the case of a certain thickness of the current collector 2212, may result in a small total thickness of the conductive layer 22122 and a low current flow capability of the conductive layer 22122, which are also difficult to meet the requirements of both a high energy density and a high rate. Therefore, 2≤H₁/H₂≤20 allows the current collector 2212 to have good strength and elongation and the conductive layer 22122 of the current collector 2212 to have a good current flow capability. The battery cell 20 manufactured using such current collector 2212 can meet the requirements of both a high energy density and a high rate.

In some embodiments, in the thickness direction X of the current collector, the thickness of the support layer 22121 is H₁, satisfying 1µm≤H₁≤20µm.

For example, H₁ may be 1µm, 3µm, 5µm, 6µm, 8µm, 10µm, 13µm, 15µm, 18µm, 20µm, or the like.

If 1µm>H₁, the strength and elongation of the support layer 22121 are both low, resulting in low strength and elongation of the current collector 2212. If H₁>20µm, the support layer 22121 has a large thickness, causing the current collector 2212 to have a large thickness and occupy a large space, which may decrease the energy density of the battery cell 20 manufactured using the current collector 2212. Therefore, 1µm≤H₁≤20µm allows the current collector 2212 to have good strength and elongation to meet the requirement on swelling alleviation of the battery cell 20 with high energy density.

In some embodiments, 3µm≤H₁≤14µm.

For example, H₁ may be 3µm, 4µm, 4.5µm, 7µm, 7.5µm, 9µm, 10.5µm, 11µm, 12µm, 14µm, or the like.

In the case of 3µm≤H₁≤14µm, the strength and elongation of the support layer 22121 are both good, resulting in good strength and elongation of the current collector 2212, to meet the requirement on swelling alleviation of the battery cell 20 with high energy density.

In some embodiments, the total thickness of the conductive layer 22122 of the current collector 2212 is H₂, satisfying 0.1µm≤H₂≤10µm.

For example, H₂ may be 0.1µm 0.5µm, 1µm, 2µm, 3µm, 5µm, 7µm, 9µm, 10µm, or the like.

If 0.1µm>H₂, the current flow capability of the conductive layer 22122 is weak. If H₁>10µm, the conductive layer 22122 has a large thickness, occupying a large space, which may decrease the energy density of the battery cell 20 manufactured using the current collector 2212. Therefore, 0.1µm ≤H₁≤10µm allows the conductive layer 22122 of the current collector 2212 to have good electrical conductivity to meet the high rate requirement of the battery cell 20.

In some embodiments, 0.5µm≤H₂≤5µm.

For example, H₂ may be 0.5µm, 0.8µm, 1.5µm, 1.8µm, 2.5µm, 2.8µm, 3.5µm, 3.8µm, 4µm, 4.5µm, 4.8µm, 5µm, or the like.

0.5µm≤H₁≤5µm allows the conductive layer 22122 of the current collector 2212 to have better electrical conductivity to meet the high rate requirement of the battery cell 20.

As shown in FIG. 9, in some embodiments, a surface of the conductive layer 22122 facing the support layer 22121 is provided with a protrusion 22123, the protrusion 22123 being inserted in the support layer 22121.

In the thickness direction X of the current collector, the surface of the conductive layer 22122 facing the support layer 22121 may be provided with one or more protrusions 22123. "A plurality of" means two or more. In an embodiment in which the surface of the conductive layer 22122 facing the support layer 22121 is provided with a plurality of protrusions 22123, and the plurality of protrusions 22123 are spaced apart. The plurality of protrusions 22123 may be spaced apart uniformly or non-uniformly on the surface of the conductive layer 22122 facing the support layer 22121.

The protrusion 22123 is inserted in the support layer 22121, and the surface of the support layer 22121 facing the conductive layer 22122 is provided with a recess 22124 for the protrusion to insert. The recess 22124 in the support layer 22121 may be formed before the protrusion 22123 is inserted in the support layer 22121. In other words, before the conductive layer 22122 is disposed on the support layer 22121, the surface of the support layer 22121 is provided with a recess 22124 in the thickness direction X of the current collector. The recess 22124 on the support layer 22121 may further be formed in the process of inserting the protrusion 22123 in the support layer 22121.

The protrusion 22123 may be in many shapes. For example, the protrusion 22123 is of a cylindrical structure, a prismatic structure, or the like. The recess 22124 may fit the protrusion 22123 in shape, such that better fitting between the protrusion 22123 and the recess 22124 improves the stability of connection between the conductive layer 22122 and the support layer 22121. For example, when the protrusion 22123 is of a triangular pyramid structure, the recess 22124 may alternatively be of a triangular pyramid structure, and the outer peripheral surface of the protrusion 22123 fits the inner wall of the recess 22124. When the protrusion 22123 is of a conical structure, the recess 22124 may alternatively be of a conical structure, and the outer peripheral surface of the protrusion 22123 fits the inner wall of the recess 22124.

The protrusion 22123 disposed on the surface of the conductive layer 22122 facing the support layer 22121 is inserted in the support layer 22121, which can increase the connection area between the conductive layer 22122 and the support layer 22121 and helps improve the connection stability between the conductive layer 22122 and the support layer 22121. The protrusion 22123 disposed on the surface of the conductive layer 22122 facing the support layer 22121 is inserted in the support layer 22121, which can enhance the connection force between the conductive layer 22122 and the support layer 22121. During swelling of the current collector 2212, the connection force can restrain swelling of the conductive layer 22122 and support layer 22121, which helps alleviate swelling of the current collector 2212 and increase elongation of the current collector 2212. In this way, the current collector 2212 can meet the requirement on swelling alleviation of the battery cell 20 with high energy density, thereby improving the reliability of the battery cell 20 with high energy density.

In some embodiments, the support layer 22121 is an insulating layer.

The support layer 22121 being an insulating layer can reduce the short-circuit risk, of the battery cell 20 including the current collector 2212, due to the contact between another structure and the conductive layer 22122, thereby improving the reliability of the battery cell 20. In an embodiment in which the conductive layer 22122 is disposed on each of two sides of the support layer 22121 in the thickness direction X of the current collector, the insulating layer can insulate and separate the conductive layers 22122 on two sides.

The support layer 22121 can not only enhance the strength of the current collector 2212, but also reduce the weight of the current collector 2212, thereby reducing the weight of the battery cell 20 manufactured using the current collector 2212.

In some embodiments, a material of the insulating layer includes at least one of polypropylene, polyethylene, and polyethylene terephthalate.

The insulating layer may be made of any one of polypropylene, polyethylene, and polyethylene terephthalate.

The insulating layer may be jointly made of several of polypropylene, polyethylene, and polyethylene terephthalate. For example, the insulating layer may be made of polypropylene and polyethylene, the insulating layer may be made of polyethylene and polyethylene terephthalate, the insulating layer may be made of polypropylene and polyethylene terephthalate, or the insulating layer may be jointly made of polypropylene, polyethylene, and polyethylene terephthalate.

Polypropylene, polyethylene, and polyethylene terephthalate have good insulation properties and heat resistance, and thus it is reliable to use the battery cell 20 manufactured using the current collector 2212. Polypropylene, polyethylene, and polyethylene terephthalate are relatively light, which helps reduce the weight of the current collector 2212, thereby reducing the weight of the battery cell 20 manufactured using the current collector 2212.

In some other embodiments, the support layer 22121 may further be a conductor or semiconductor made of a material different from that of the conductive layer 22122.

In some embodiments, the conductive layer 22122 is made of copper or aluminum.

If the current collector 2212 serves as a current collector 2212 of the positive electrode plate, the conductive layer 22122 may be made of aluminum. If the current collector 2212 serves as a current collector 2212 of the negative electrode plate, the conductive layer 22122 may be made of aluminum.

Copper or aluminum has good electrical conductivity, which helps improve the reliability of a battery cell 20 manufactured using the current collector 2212.

As shown in FIGs. 10 and 11, in some embodiments, in the thickness direction X of the current collector, the conductive layer 22122 is disposed on each of two sides of the support layer 22121.

The current collector 2212 includes the support layer 22121 and two conductive layers 22122. In the thickness direction X of the current collector, the two conductive layers 22122 are respectively disposed on two sides of the support layer 22121.

Materials of the two conductive layers 22122 may be the same or different. Thicknesses of the two conductive layers 22122 may be the same or different.

The total thickness of the conductive layers 22122 of the current collector 2212 is a sum of the thicknesses of the conductive layers 22122 disposed on two sides of the support layer 22121. For example, as shown in FIG. 11, in the thickness direction X of the current collector, the conductive layers 22122 are respectively disposed on two sides of the support layer 22121. The support layer 22121 is of a uniformly thick structure, and the conductive layers 22122 on the two sides of the support layer 22121 are both of a uniformly thick structure. The thicknesses of the two conductive layers 22122 are H₂₁ and H₂₂, where H₂=H₂₁+H₂₂. In FIG. 11, in any two positions in the width direction Z of the current collector, the thickness of the support layer 22121 is greater than the total thickness of the conductive layers 22122 of the current collector 2212, and differences between the thicknesses of the support layer 22121 and the total thicknesses of the conductive layers 22122 of the current collector 2212 are equal. For example, in FIG. 11, at position A3, the thickness of the support layer 22121 is greater than the total thickness of the conductive layers 22122 of the current collector 2212, and at position B3, the thickness of the support layer 22121 is greater than the total thickness of the conductive layers 22122 of the current collector 2212. In addition, the difference between the thickness of the support layer 22121 at position A3 and the total thickness of the conductive layers 22122 of the current collector 2212 at position A3 equals the difference between the thickness of the support layer 22121 at position B3 and the total thickness of the conductive layers 22122 of the current collector 2212 at position B3.

As shown in FIG. 12, in the thickness direction X of the current collector, the conductive layer 22122 is disposed on each of two sides of the support layer 22121. The support layer 22121 is of a uniformly thick structure, and the conductive layers 22122 on two sides of the support layer 22121 are both of a uniformly thick structure. The thicknesses of the two conductive layers 22122 in the same position are respectively H₂₁ and H₂₂, and H₂=H₂₁+H₂₂. In FIG. 12, in any two positions in the width direction Z of the current collector, the thickness of the support layer 22121 is greater than the total thickness of the conductive layers 22122 of the current collector 2212, and differences between the thicknesses of the support layer 22121 and the total thicknesses of the conductive layers 22122 of the current collector 2212 may be different. For example, in FIG. 12, at position A4, the thickness of the support layer 22121 is greater than the total thickness of the conductive layers 22122 of the current collector 2212, and at position B4, the thickness of the support layer 22121 is greater than the total thickness of the conductive layers 22122 of the current collector 2212. In addition, the difference between the thickness of the support layer 22121 at position A4 and the total thickness of the conductive layers 22122 of the current collector 2212 at position A4 may be different from the difference between the thickness of the support layer 22121 at position B4 and the total thickness of the conductive layers 22122 of the current collector 2212 at position B4.

In the thickness direction X of the current collector, an active substance layer 2211 may be disposed on a side of the conductive layer 22122 back away from the support layer 22121.

As the conductive layer 22122 is disposed on each of two sides of the support layer 22121, in the thickness direction X of the current collector, the active substance layer 2211 can be disposed on each of two sides of the current collector 2212, which helps increase the energy density of the battery cell 20 including the current collector 2212.

The embodiments of this application further provide an electrode plate 221. The electrode plate 221 includes an active substance layer and the current collector 2212 provided in any one of the foregoing embodiments. In the thickness direction X of the current collector, the active substance layer 2211 is disposed on a side of the conductive layer 22122 back away from the support layer 22121.

The active substance layer 2211 may be applied to the surface of the conductive layer 22122 back away from the support layer 22121. In an embodiment in which the conductive layer 22122 is disposed on each of two sides of the insulating layer of the current collector 2212 in the thickness direction X of the current collector, the active substance layer 2211 may be uniformly applied to the surfaces of the conductive layers 22122, on two sides, back away from the support layer 22121, or may be uniformly applied to the surface of only one conductive layer 22122 back away from the support layer 22121.

The material of the active substance layer 2211 varies with the polarity of the electrode plate 221. For example, when the electrode plate 221 is a positive electrode plate, the active substance layer 2211 may be made of lithium cobalt oxide, lithium iron phosphate, lithium ternary, lithium manganese oxide, or the like. If the electrode plate 221 is a negative electrode plate, the active substance layer 2211 may be made of carbon, silicon, or the like.

The insulating layer of the current collector 2212 provided in any one of the foregoing embodiments has good extensibility, allowing the current collector 2212 provided in any one of the foregoing embodiments of the first aspect to withstand a large swelling force, such that an electrode plate 221 including the current collector 2212 can withstand a large swelling force and the electrode plate 221 can meet the requirement on swelling alleviation of a battery cell 20 with high energy density, thereby improving the reliability of the battery cell 20, with high energy density, manufactured using the electrode plate 221.

The embodiments of this application further provide an electrode assembly 22, where the electrode assembly 22 includes the electrode plate 221 provided in any one of the foregoing embodiments.

The electrode assembly 22 includes two electrode plates 221 with opposite polarities, and the electrode plate 221 provided in any one of the foregoing embodiments may serve as a positive electrode plate of the electrode assembly 22 or a negative electrode plate. Alternatively, the two electrode plates 221 with opposite polarities may both be the electrode plate 221 provided in any one of the foregoing embodiments.

Because the elongation of the current collector 2212 of the electrode plate 221 provided in any one of the foregoing embodiments is large, the electrode plate 221 can withstand a large swelling force, and the electrode assembly 22 including the electrode plate 221 can also withstand the large swelling force, which is beneficial for the electrode assembly 22 to meet the requirement on swelling alleviation of the battery cell 20 with high energy density.

In some embodiments, the electrode assembly 22 includes two electrode plates 221 provided in any one of the foregoing embodiments, the two electrode plates 221 with opposite polarities.

That is, the positive electrode plate and negative electrode plate of the electrode assembly 22 are both the electrode plate 221 provided in any one of the foregoing embodiments, and each electrode plate 221 of the electrode assembly 22 can withstand a large swelling force, such that the electrode assembly 22 can meet the requirement on swelling alleviation of the battery cell 20 with high energy density.

In some embodiments, the electrode assembly 22 is a wound electrode assembly 22.

The wound electrode assembly 22 is a structure formed by stacking and winding a separator and two electrode plates 221 with opposite polarities. The wound electrode assembly 22 may be in many shapes of, for example, a cylinder or square.

During cycling of the battery cell 20, the wound electrode assembly 22 withstands a large swelling force. The electrode plate 221 of the electrode assembly 22 is made using the current collector 2212 provided in the foregoing embodiment, and thus can beat a large swelling force, meet the requirement on swelling alleviation in the environment where the wound electrode assembly 22 is located, and reduce the risk of breaking the electrode plate 221 of the wound electrode assembly 22, improving the reliability of the battery cell 20 including the wound electrode assembly 22.

The embodiments of this application further provide a battery cell 20, where the battery cell 20 includes the electrode assembly 22 provided in any one of the foregoing embodiments.

At least one electrode plate 221 of the electrode assembly 22 provided in any one of the foregoing embodiments can withstand a large swelling force, and therefore the battery cell 20 including the electrode assembly 22 has a low risk of short circuit due to the breaking of the electrode plate 221, which helps improve the reliability of the battery cell 20.

In some embodiments, the battery cell 20 is of a cylindrical structure.

The housing 21 of the battery cell 20 and the electrode assembly 22 are both of a cylindrical structure. The battery cell 20 being a lithium-ion battery cell 100 is used as an example. As the energy density of the lithium-ion battery 100 continuously increases, the active substance layer 2211 of the negative electrode plate has evolved from graphite (C) to silicon/graphite (Si/C), and as the silicon content continuously increases, the volume swelling rate of the battery cell 20 continuously increases. The housing 21 with a cylindrical structure has a limited internal space for use, and thus during charging of the battery cell 20, the electrode plate 221 has a limited swelling space. After the silicon/graphite (Si/C) battery cell 20 with high energy density is charged, the electrode plate 221 withstands a large swelling force and is likely to be damaged and broken, piercing the separator to abut against the adjacent electrode plate 221. This is likely to cause short circuit and thermal runaway of the lithium-ion battery 100.

The electrode plate 221 of the electrode assembly 22 of the battery cell 20 with a cylindrical structure can withstand a large swelling force, such that the battery cell 20 with a cylindrical structure has a low risk of short circuit due to the breaking of the electrode plate 221, which helps improve the reliability of the battery cell 20 with a cylindrical structure.

The embodiments of this application further provide a battery 100, where the battery 100 includes the battery cell 20 provided in any one of the foregoing embodiments.

The battery cell 20 provided in any one of the embodiments has good reliability, and the battery 100 including the battery cell 20 also has good reliability.

The embodiments of this application further provide an electric device, including the battery 100 provided in any one of the foregoing embodiments.

The battery 100 provided in the foregoing embodiment has good reliability, and an electric device to which the battery 100 provides electrical energy has good reliability of electricity supply.

The embodiments of this application provide a battery cell 20 with a cylindrical structure. The battery cell 20 includes a housing 21 of a cylindrical structure and an electrode assembly 22 of a cylindrical structure. The electrode assembly 22 includes two electrode plates 221 with opposite polarities, and the electrode plate 221 includes a current collector 2212 and an active substance layer 2211. The current collector 2212 includes a support layer 22121 and two conductive layers 22122. In the thickness direction X of the current collector, the two conductive layers 22122 are respectively disposed on two sides of the support layer 22121. The elongation of the support layer 22121 is greater than the elongation of conductive layer 22122. In the thickness direction X of the current collector, the thickness of the support layer 22121 is greater than the total thickness of the conductive layers 22122 of the current collector 2212. The support layer 22121 is an insulating layer, and the surface of each conductive layer 22122 back away from the support layer 22121 is coated with the active substance layer 2211.

The foregoing descriptions are merely exemplary embodiments of this application, but are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery cell, wherein the battery cell is of a cylindrical structure, and the battery cell comprises:
an electrode assembly, wherein the electrode assembly is of a wound structure, the electrode assembly comprises an electrode plate, the electrode plate comprises a current collector, the current collector comprises a support layer and a conductive layer, and in a thickness direction of the current collector, the conductive layer is disposed on at least one side of the support layer;
wherein elongation of the support layer is greater than elongation of the conductive layer, and in the thickness direction of the current collector, the support layer has a thickness greater than a total thickness of the conductive layer of the current collector.

2. The battery cell according to claim 1, wherein in the thickness direction of the current collector, the thickness of the support layer is H₁, and the total thickness of the conductive layer of the current collector is H₂, H₁ and H₂ satisfying H₁/H₂≤50.

3. The battery cell according to claim 2, wherein 2≤H₁/H₂≤20.

4. The battery cell according to any one of claims 1 to 3, wherein in the thickness direction of the current collector, the thickness of the support layer is H₁, satisfying 1µm≤H₁≤20µm.

5. The battery cell according to claim 4, wherein 3µm≤H₁≤14µm.

6. The battery cell according to any one of claims 1 to 5, wherein the total thickness of the conductive layer of the current collector is H₂, satisfying 0.1µm≤H₂≤10µm.

7. The battery cell according to claim 6, wherein 0.5µm≤H₂≤5µm.

8. The battery cell according to any one of claims 1 to 7, wherein a surface of the conductive layer facing the support layer is provided with a protrusion, the protrusion being inserted in the support layer.

9. The battery cell according to any one of claims 1 to 8, wherein the support layer is an insulating layer.

10. The battery cell according to claim 9, wherein a material of the insulating layer comprises at least one of polypropylene, polyethylene, and polyethylene terephthalate.

11. The battery cell according to any one of claims 1 to 10, wherein the conductive layer is made of copper or aluminum.

12. The battery cell according to any one of claims 1 to 11, wherein in the thickness direction of the current collector, the conductive layer is disposed on each of two sides of the support layer.

13. The battery cell according to any one of claims 1 to 12, wherein the electrode plate comprises an active substance layer, and in the thickness direction of the current collector, the active substance layer is disposed on a side of the conductive layer back away from the support layer.

14. The battery cell according to any one of claims 1 to 13, wherein the electrode assembly comprises such two electrode plates with opposite polarities.

15. A battery, comprising the battery cell according to any one of claims 1 to 14.

16. An electric device, comprising the battery cell according to any one of claims 1 to 14.
